# EUROPÄISCHE PATENTSCHRIFT

(11) **EP 3 137 278 B1**
(45) Veröffentlichungstag und Bekanntmachung des Hinweises auf die Patenterteilung: **29.09.2021**
(21) Anmeldenummer: 15752918.1
(22) Anmeldetag: 11.08.2015
(51) Int. Cl.: B29C 49/80, B29C 49/08, B29C 49/06, B29C 49/42, B29C 49/78, G01N 21/90

(54) **VORRICHTUNG UND VERFAHREN ZUM TRANSPORT VON VORFORMLINGEN IM BEREICH EINER BLASMASCHINE**
DEVICE AND METHOD FOR TRANSPORTING PREFORMS IN THE REGION OF A BLOW-MOLDING MACHINE
DISPOSITIFS ET PROCÉDÉS POUR LE TRANSPORT DE PRÉFORMES DANS LA ZONE D'UNE MACHINE DE SOUFFLAGE

(30) Priorität: 28.08.2014 DE 102014012528
(43) Veröffentlichungstag der Anmeldung: 08.03.2017
(73) Patentinhaber: KHS Corpoplast GmbH, 22145 Hamburg (DE); KHS GmbH, 44143 Dortmund (DE)
(72) Erfinder: BAUMGARTE, Rolf, 22926 Ahrenburg (DE); LINKE, Michael, 22159 Hamburg (DE); LEWIN, Frank, 22889 Tangstedt (DE); SCHENK, Dirk, 55546 Neu-Bamberg (DE)
(74) Vertreter: Eisenführ Speiser
(86) Internationale Anmeldenummer: PCT/EP2015/001650
(87) Internationale Veröffentlichungsnummer: WO 2016/029997

(56) Entgegenhaltungen:
- EP-A2- 2 441 563
- DE-A1-102010 028 984
- DE-A1-102012 102 073
- None

## Beschreibung

Die vorliegende Erfindung betrifft eine Sortiervorrichtung gemäß dem Oberbegriff des Anspruchs 1, ein Verfahren zur Zuführung von Vorformlingen an eine Blasmaschine zur Blasformung von Behältern gemäß dem Oberbegriff des Anspruchs 7, sowie eine Transportvorrichtung zur Zuführung von Vorformlingen an eine Blasmaschine gemäß dem Oberbegriff des Anspruchs 13, und eine Blasmaschine zur Blasformung von Behältern aus einem thermoplastischen Material gemäß dem Oberbegriff des Anspruchs 14.

Bei der Behälterformung durch Blasdruckeinwirkung werden Vorformlinge aus einem thermoplastischen Material, beispielsweise aus PET (Polyethylenterephthalat), im Bereich einer Blasmaschine unterschiedlichen Bearbeitungsstationen zugeführt. Typischerweise weist eine derartige Blasmaschine eine Transportvorrichtung zur Zuführung von Vorformlingen an die Blasmaschine, eine Heizeinrichtung zur thermischen Konditionierung der Vorformlinge und eine Blasstation mit Blaseinrichtung auf, in deren Bereich die temperierten Vorformlinge durch biaxiale Ausdehnung zu einem Behälter expandiert werden. Die Expansion erfolgt mit Hilfe von unter Druck stehendem Gas, das in den zu expandierenden Vorformling eingeleitet wird.

Für einen unterbrechungsfreien Herstellungsprozess muss die Blasmaschine kontinuierlich mit Vorformlingen versorgt werden. Üblicherweise werden die Vorformlinge über einen sogenannten Vorformlingsförderer an die Blasmaschine geführt. Der Vorformlingsförderer besteht typischerweise aus einem Silo, in dem Vorformlinge unsortiert bevorratet sind, einem Steigförderer zur Entnahme und Weiterleitung der in dem Silo bevorrateten Vorformlinge, einem sich dem Steigförderer anschließenden Rollenförderer zur Ausrichtung der Vorformlinge und einer stromabwärts zum Rollenförderer angeordneten Ablaufschiene mit der die Vorformlinge der Blasmaschine ausgerichtet und aufgereiht zugeführt werden. Von der Ablaufschiene werden die Vorformlinge üblicherweise an ein Transportrad übergeben, mit dem sie in einen der Blasstation vorgeschalteten Bereich einer Heizvorrichtung transportiert werden.

Nach der Übergabe der Vorformlinge aus der Ablaufschiene an das Transportrad ist üblicherweise vorgesehen, die Vorformlinge auf Fehler und Unregelmäßigkeiten hin zu überprüfen und die als fehlerhaft oder für den Blasprozess als ungeeignet erkannten Vorformlinge mittels einer Selektionseinrichtung vor der Weiterführung an die Heizvorrichtung aus dem Transportstrom auszuschleusen.

Das Transportrad für die Übernahme aufgereihter und ausgerichteter Vorformlinge ist üblicherweise als Taschenrad konstruiert, wobei in den Taschen aufgenommene Vorformlinge zwischen dem Transportrad und einem in radialer Richtung zu dem Transportrad beabstandeten kurvenartigen Führungskragen hängend auf einer Kreisbahn transportiert werden. Dem Transportrad ist üblicherweise eine Inspektionsvorrichtung zugeordnet, die die fehlerhaften oder für die Weiterverarbeitung ungeeigneten Vorformlinge erkennt. Zur Aussortierung ungeeigneter Vorformlinge ist bekannt, den kurvenartigen Führungskragen, an dem die Vorformlinge mittels des Transportrades geführt werden, mit einer Schwenkbewegung von dem Transportrad zu entfernen. Die zur Schwenkzeit zwischen dem Transportrad und dem Führungskragen hängend transportierten Vorformlinge werden bei dieser Bewegung ausgeworfen.

So beschreibt die Druckschrift DE 10 2012 102 073 A1 ein Verfahren und ein Modul zur optischen Kontrolle von PET-Flaschenvorformlingen, wobei fehlerhafte Vorformlinge aussortiert werden. US 5 239 808 A zeigt einen weiteren Stand der Technik. Bei Auswurfmechaniken der beschriebenen Art ist nachteilig, dass gleich mehrere zwischen dem Führungskragen und dem Transportrad hängende Vorformlinge aussortiert werden. Damit werden nicht nur für die Weiterverarbeitung ungeeignete Vorformlinge aussortiert, sondern auch völlig intakte, für die Herstellung von Behältern gut geeignete Vorformlinge. Die beschriebene Auswurfmechanik führt aber nicht nur zu unnötigem Auswurf gut geeigneter Vorformlinge, sondern verursacht auch eine Verzögerung bei der Weiterführung der Vorformlinge. Die Schwenkbewegung des Führungskragens ist eine alternierende Bewegung, bei der der Führungskragen zunächst aus einer Grundposition heraus verschwenkt und nach dem Auswurf der Vorformlinge wieder zurückgeschwenkt werden muss. In dieser Zeit können keine weiteren Vorformlinge von dem Transportrad transportiert werden. Die Zuführung von weiteren Vorformlingen an das Transportrad wird während dieser Schwenkzeit üblicherweise gestoppt. Insbesondere bei hohen Prozessgeschwindigkeiten, bei denen mehrere Vorformlinge pro Sekunde zu Behältern geblasen werden, sind zeitaufwendige Vor- und Rückbewegungen derartiger Ausstoßmechaniken ungeeignet.

Vor diesem Hintergrund ist Aufgabe der vorliegenden Erfindung gattungsgemäße Verfahren und Vorrichtungen bereitzustellen, die eine Zuführung von Vorformlingen an eine Blasmaschine mit hohen Geschwindigkeiten unterstützen und gleichzeitig den unbeabsichtigten Auswurf von für die Weiterverarbeitung geeigneten Vorformlingen verhindern.

Die Aufgabe wird gelöst durch eine Sortiervorrichtung mit den Merkmalen des Anspruchs 1, durch ein Verfahren mit den Merkmalen des Anspruchs 7, durch eine Transportvorrichtung mit den Merkmalen des Anspruchs 13 und durch eine Blasmaschine mit den Merkmalen des Anspruchs 14. Vorteilhafte Ausgestaltungen sind in den Unteransprüchen angegeben.

Erfindungsgemäß ist eine Sortiervorrichtung zum Transport von Vorformlingen aus einem thermoplastischen Material im Bereich einer Blasmaschine zur Blasformung von Behältern, aufweisend ein Transportrad mit mehreren, an seinem Umfang in Umfangsrichtung verteilt angeordneten Aufnahmerezessen zur Aufnahme und Beförderung der Vorformlinge, einen Führungskragen, der das Transportrad radial beabstandet bereichsweise umläuft, wobei die Vorformlinge im Bereich der Sortiervorrichtung zwischen dem Transportrad und dem Führungskragen hängend transportiert werden, und eine Selektiereinheit zur selektiven Aussonderung jeweils eines einzelnen, in einem der Aufnahmerezesse des Transportrades transportieren Vorformlings, wobei die Selektiereinheit einen drehbar gelagerten Auswurfstern mit mehreren Auswurfarmen aufweist, der in der Ruhestellung mit einem ersten Auswurfarm in Transportrichtung der Vorformlinge unmittelbar an den Führungskragen anschließend derart in den Umfangsbereich des Transportrades greift, dass die in den Aufnahmerezessen an dem ersten Auswurfarm vorbeitransportierten Vorformlinge gegen Herausfallen aus den jeweiligen Aufnahmerezessen gesichert sind, wobei der Auswurfstern bei einer Rotationsbewegung mit einem dem ersten Auswurfarm nachlaufenden zweiten Auswurfarm einen einzelnen auszusondernden Vorformling aus einem der Aufnahmerezesse des Transportrades herausstößt, und wobei der zweite Auswurfarm nach erfolgtem Ausstoß des auszusondernden Vorformlings in die die Vorformlinge (20) gegen Herausfallen sichernde Position rückt.

In einer denkbaren Variante der erfindungsgemäßen Sortiervorrichtung kann das Transportrad als Taschenrad mit an seinem Umfang, insbesondere gleichmäßig, verteilt angeordneten taschenartigen Aufnahmerezessen ausgebildet sein. Erfindungsgemäß ist vorgesehen, dass die Aufnahmerezesse des Transportrades die Vorformlinge jeweils an einem Schaftbereich unterhalb eines Stützrings des Vorformlings in der Transportstellung zumindest bereichsweise umgreifend ausgebildet sind.

Mit der Sortiervorrichtung können einzelne, an dem Transportrad transportierte Vorformlinge aus dem Transportstrom ausgesondert bzw. ausgeworfen oder ausgeschleust werden. Darunter wird verstanden, dass die zur Aussonderung selektierten Vorformlinge aus dem Transportstrom herausgeführt werden und somit den sich anschließenden Prozessschritten zur Herstellung eines Behälters entzogen werden. Es versteht sich, dass zeitlich nacheinander beliebig viele zur Aussonderung vorgesehener Vorformlinge aus dem Transportstrom im Bereich der Sortiervorrichtung entfernt werden können.

Diese vorgeschlagene Art der Aussortierung einzelner Vorformlinge, hat sich als besonders vorteilhaft für einen Transport bei hohen Prozessgeschwindigkeiten gezeigt. Im Gegensatz zu herkömmlich eingesetzten Auswurfmechaniken, bei denen Vorformlinge durch Weichen, durch vor- und zurück-schwenkende Führungskragen oder durch linear bewegte Auswerfer aus dem Transportstrom ausgesondert werden, ist die erfindungsgemäße rotierende Auswurfbewegung mittels eines Auswurfsterns besonders zeitsparend. Die sonst notwendigen Rückstellbewegungen bei alternierend bewegten Mechaniken entfallen.

Durch das taktartige Weiterbewegen das Auswurfsterns wird jeweils ein zur Aussonderung vorgesehener Vorformling ausgeworfen, wobei ohne Rückstellbewegung des Auswurfsterns sofort für den nachfolgenden Vorformling ein weiterer Auswurfarm in wiederkehrender Weise bereitgestellt ist. Der nachlaufende Auswurfarm stößt den auszusondernden Vorformling aktiv aus und übernimmt nach erfolgter Auswurfrotation die Funktion des ersten Auswurfarms. Diese Auswurfbewegung ist beliebig oft ohne Rückrotation ausführbar. Dies führt zur Leistungssteigerung derartiger Sortiervorrichtungen, damit verbundener Transportvorrichtungen, zugehöriger Inspektionssysteme und schließlich zur Leistungssteigerung der Blasmaschinen insgesamt.

Der radial zum Transportrad beanstandete Führungskragen bildet eine Sicherung der an dem Transportrad in den Aufnahmerezessen geführten Vorformlinge gegen das Herausfallen aus dem Transportrad. Die an dem Transportrad transportierten Vorformlinge gleiten bevorzugt an einem unterhalb ihres Mündungsbereiches angeordneten Stützring hängend auf dem Führungskragen entlang. Vorzugsweise ist der Führungskragen in einem konstanten Abstand umfangsbeabstandet zu dem Transportrad angeordnet. Es kann vorgesehen sein, dass der Führungskragen ortsfest, starr bzw. unbeweglich zu dem Transportrad angeordnet ist.

Erfindungsgemäß ist der Auswurfstern drehbar gelagert Die Auswurfmechanik ist etwa revolverartig, derart dass der Auswurfstern für jede Aussonderung eines einzelnen Vorformlings vorzugsweise segmentweise, das heißt über einen definierbaren Winkelbereich rotiert.

In denkbaren Ausführungsformen kann das Auswerfen bzw. Herausführen eines einzelnen Vorformlings aus dem Transportstrom kann aktiv und/oder passiv ausgeführt sein. Bei einer passiven Auswurfbewegung kann vorgesehen sein, das sich ein Auswurfarm des Auswurfsterns von dem Transportrad in mit radial nach außen weisender Richtungskomponente wegbewegt und somit die Sicherung des Vorformlings gegen Herausfallen aus einem Aufnahmerezess des Transportrades aufgibt. Dabei fällt der Vorformling aus dem Transportstrom heraus.

Bei einer aktiven Ausführung kann vorgesehen sein, dass der Auswurfstern den auszusondernden Vorformling zwangsgeführt aus dem Aufnahmerezess des Transportrades herausbewegt bzw. herausstößt. Dafür kann vorgesehen sein, dass ein in Rotationsrichtung des Auswurfsterns vorlaufender Auswurfbereich den auszusondernden Vorformling physisch kontaktiert und aus dem Transportstrom herausstößt.

Eine passive Ausgestaltung ist insbesondere vorgesehen bei Sortiervorrichtungen, bei denen die Vorformlinge zwischen einem Rand des Transportrades und einem dazu radial nach außen beabstandeten Führungskragen frei hängend transportiert werden. Der Auswurfstern ergänzt dafür den Führungskragen an einer Unterbrechung, so dass die Vorformlinge in der Ruhestellung des Auswurfsterns ununterbrochen weitergeführt werden können und bei der Rotation des Auswurfsterns insbesondere schwerkraftbedingt von dem Transportrad herabfallen. Zusätzlich ist bei dieser Ausgestaltung möglich, dass bei dem Fallenlassen aus dem Aufnahmerezess des Transportrades der auszusondernde Vorformling aktiv von einem nachfolgenden Auswurfarm des Auswurfsterns von Transportrad wegführend gestoßen wird.

Die sichere Wegführung eines auszusondernden Vorformlings kann dadurch verbessert werden, was insbesondere bei an dem Transportrad klemmenden oder hängenbleibenden Vorformlingen von Vorteil ist.

Bei der Ausgestaltung des Transportrades ist auch denkbar, dass die Vorformlinge in den Aufnahmerezessen klemmend transportiert werden. Bei dieser Variante kann ein Führungskragen in radialem Abstand zum Transportrad entfallen. Dazu ist denkbar, dass die Aufnahmerezesse etwa zangenförmig die Vorformlinge umgreifen, insbesondere über einen Winkelbereich von mehr als 180°. Bei dieser Variante ist insbesondere die mit dem rotierenden Auswurfstern erläuterte aktive Ausgestaltung der Auswurfmechanik vorteilhaft.

In einer bevorzugten Ausgestaltung kann vorgesehen sein, dass in Transportrichtung der Vorformlinge in unmittelbarem Anschluss an den Auswurfstern ein zweiter Führungskragen radial beabstandet zum Transportrad angeordnet ist, derart, dass die beim Transport durch die sich in Ruhestellung befindenden Auswurfarme gegen Herausfallen gesicherten Vorformlinge von dem Auswurfstern übernommen und zwischen dem zweiten Führungskragen und dem Transportrad hängend zumindest bereichsweise der Umfangsrichtung des Transportrades folgend weiterführt werden.

Bei dieser Ausgestaltung ist daran gedacht, dass ein gemeinsamer Führungskragen durch zwei Führungskragenabschnitte ausgebildet ist, wobei der Transportstern im Bereich der Sortiervorrichtung derart angeordnet ist, dass in der Ruhestellung einer der Auswurfarme eine Lücke zwischen den Führungskragenabschnitten schließt. Der die Lücke schließende Auswurfarm sichert in Ruhestellung die im Bereich der Lücke transportierten Vorformlinge gegen Herausfallen aus den jeweiligen Aufnahmerezessen. Die die Vorformlinge sind also unterbrechungsfrei entlang des ersten Führungskragenabschnittes, an dem die Lücke schließenden Auswurfarm vorbei in den Fassungsbereich des zweiten Führungskragenabschnitts transportierbar. Bei der Rotation des Auswurfarmes wird die Lücke durch Wegrotieren des dort Auswurfarms geöffnet und mit dem nachfolgenden Auswurfarm erneut geschlossen. Dabei wird ein im Bereich der Lücke befindlicher Vorformling aus dem Transportstrom ausgeschleust.

Denkbar ist, dass die Rotationsachse des Auswurfsterns und die Rotationsachse des Transportrades in winklig zueinander verlaufenden Ebenen liegen. Insbesondere ist daran gedacht, dass die Rotationsachsen des Auswurfsterns und des Transportrades in senkrecht zueinander verlaufenden Ebenen liegen. Bevorzugt ist vorgesehen, dass sowohl der Auswurfstern als auch das Transportrad um jeweils starr angeordnete Drehachsen rotierend gelagert sind.

Eine sichere Ausschleusung eines zur Aussonderung vorgesehenen Vorformlings wird dadurch unterstützt, dass der Auswurfstern den auszuschleusenden Vorformling zwangsgeführt aus dem Aufnahmerezess herausbewegt. Die zwangsgeführte Herausbewegung entspricht etwa der oben erläuterten aktiven Ausgestaltung der Auswurfmechanik. Bei dieser Ausführungsform ist vorgesehen, dass die auszusondernden Vorformlinge mit einer Richtungskomponente in radial nach außen weisender Richtung des Transportrades aus den Aufnahmerezessen insbesondere stoßartig herausbewegt werden. Bei der zwangsgeführten Bewegung erfasst ein Arm des Auswurfsterns den auszuschleusenden Vorformling und stößt diesen mechanisch von dem Transportrad weg.

Für eine konstruktiv vorteilhafte Ausgestaltung kann vorgesehen sein, dass der Auswurfstern mindestens drei Auswurfarme aufweist, wobei die Auswurfarme jeweils einen Führungsabschnitt mit einem Haltebereich zur Sicherung eines im Bereich des Auswurfsterns transportierten Vorformlings aufweisen.

Wie bereits zuvor erläutert, kann ein Haltebereich eines Führungsabschnitts des Auswurfsterns die an dem Transportrad geführten Vorformlinge gegen Herausfallen aus den Aufnahmerezessen sichern. Dafür kontaktiert der Haltebereich des Führungsabschnitts die Vorformling physisch insbesondere unterhalb eines unterhalb ihres Mündungsbereiches angeordneten Stützrings.

In einer Variante kann alternativ oder zusätzlich vorgesehen sein, dass der Auswurfstern mindestens drei Auswurfarme aufweist, wobei die Auswurfarme jeweils einen Führungsabschnitt mit einem Auswurfbereich zum Ausstoßen eines im Bereich des Auswurfsterns transportierten Vorformlings aufweisen. Wie bereits zuvor erläutert, kann ein Auswurfbereich zum aktiven Ausstoßen eines in einem Aufnahmerezess des Transportrades aufgenommenen Vorformlings dienen.

Bei den zuvor erläuterten Varianten sind Auswurfsterne mit drei, vier, fünf oder sechs Auswurfarmen denkbar.

Für eine einfache Anpassbarkeit der Prozessgeschwindigkeit der Sortiereinrichtung und für einen reibungslosen Ablauf des Aussonderungsprozesses beim Wechsel von Transportgeschwindigkeiten im Bereich der Sortiervorrichtung kann vorgesehen sein, dass die Rotationsbewegung des Auswurfsterns mit der Rotationsbewegung des Transportrades synchronisiert ist.

Bei der synchronisierten Rotationsbewegung des Auswurfsterns mit dem Transportrad ist insbesondere daran gedacht, dass die Rotationsgeschwindigkeiten des Auswurfsterns und des Transportrades linear voneinander abhängig sind. Dies kann bedeuten, dass bei der Erhöhung der Rotationsgeschwindigkeit des Transportrades auch die Rotationsgeschwindigkeit des Auswurfsterns beim Aussondern eines einzelnen Vorformlings in linearem Verhältnis steigt. Gleiches gilt beim Senken der Geschwindigkeiten. Alternativ oder zusätzlich ist auch daran gedacht, zumindest zeitweise ein nichtlineares Abhängigkeitsverhältnis zwischen den Rotationsbewegungen vorzugsehen. Dies ermöglicht eine zumindest zeitweise beschleunigte Rotationsbewegung des Auswurfsterns gegenüber dem Transportrad bzw. umgekehrt.

Die Synchronisierung der Rotationsbewegung hat Vorteile bezüglich der Skalierbarkeit der Prozessgeschwindigkeiten. Bevorzugt ist die Rotationsbewegung des Auswurfsterns bezüglich der Rotationsbewegung des Transportrades getaktet. Bei jeder taktweisen Rotation des Auswurfsterns ist dabei vorgesehen, dass der Auswurfstern über einen vordefinierbaren Winkelbereich dreht.

Bei der Synchronisierung der Rotationsbewegung ist insbesondere daran gedacht, dass eine Rotation des Auswurfsterns nur ermöglich ist, wenn sich ein Vorformling im Betätigungsbereich des Auswurfsterns befindet. Damit kann eine verfrühte bzw. eine verspätete Auslösung des Auswurfmechanismus verhindert werden. Für diese Ausgestaltung ist daran gedacht, dass die Position des Transportrades erfasst und zur Steuerung des Auswurfsterns weiter verarbeitet wird. Dies kann über eine dafür vorgesehene Steuerung erfolgen.

In einer einfachen Variante ist daran gedacht, dass die Rotationsbewegungen des Transportrades und des Auswurfsterns mechanisch gekoppelt sind, zum Beispiel über ein gemeinsames Getriebe. In einer denkbaren Ausgestaltung kann vorgesehen sein, dass die Synchronisierung alternativen oder zusätzlichen über eine elektronische Steuerung einstellbar ist.

Erfindungsgemäß ist auch ein Verfahren zur Zuführung von Vorformlingen an eine Blasmaschine zur Blasformung von Behältern aus einem thermoplastischen Material, wobei aufgereihte und ausgerichtete Vorformlinge an eine erste Vereinzelungseinheit mit einer Sortiervorrichtung zum Aussondern einzelner Vorformlinge übergeben werden, die Vorformlinge im Bereich der Vereinzelungseinheit mittels einer Inspektionsvorrichtung geprüft werden, und die Vorformlinge anschließend an eine Staustrecke zum Aufstauen und/oder zum Schließen von durch das Aussondern entstandenen Lücken übergeben werden.

Für eine zuverlässige Erkennung von fehlerhaften oder für die Weiterverarbeitung ungeeigneten Vorformlingen kann vorgesehen sein, dass die Vorformlinge im Bereich der Sortiereinrichtung mittels der Inspektionsvorrichtung kontaktlos, insbesondere optisch auf Materialunregelmäßigkeiten hin überprüft werden.

Bei dem erfindungsgemäßen Verfahren zur Zuführung von Vorformlingen werden die Vorformlinge aufgereiht und ausgerichtet an eine Vereinzelungseinheit übergeben. Dabei kann vorgesehen sein, dass die Vorformlinge im Bereich einer der Vereinzelungseinheit vorgeschalteten Fördereinrichtung, insbesondere mit einem Rollensortierer aufgereiht und ausgerichtet werden. Die erste Vereinzelungseinheit dient der Sondierung bzw. Bearbeitung einzelner Vorformlinge. Die sich der ersten Vereinzelungseinheit mit der Sortiervorrichtung anschließende Staustrecke kann zum Beispiel als Luftförderer und/oder als zumindest bereichsweise waagerecht verlaufende Ablaufschiene ausgebildet sein.

Für eine besonders effiziente Aussortierung von für den Weitertransport oder für die Weiterverarbeitung ungeeigneter Vorformlinge ist daran gedacht, dass die Vereinzelungseinheit ein Transportrad aufweist, das die Vorformlinge vor der Übergabe an die Staustrecke zunächst an die Inspektionsvorrichtung und dann zur selektiven Aussonderung an eine Selektiereinheit der Sortiervorrichtung führt.

Bei Verwendung nur eines einzigen Transportrades, das die Vorformlinge zuerst in den Bearbeitungsbereich der Inspektionsvorrichtung und anschließend in den Bearbeitungsbereich der Sortiervorrichtung bzw. der Selektiereinheit transportiert, wird einerseits ein besonders kompakter Aufbau der Blasmaschine und zugehöriger Fördereinrichtungen unterstützt und andererseits eine einfach zu steuernde Aussonderung selektierter Vorformlinge ermöglicht. An einem Transportrad werden die Vorformlinge jeweils in Halteelementen in vereinzelter Form z.B. in taschenartigen Aufnahmerezessen geführt. Mit der Inspektionsvorrichtung kann ein auszusondernder Vorformling identifiziert werden und aufgrund einer eindeutigen Zuordnung von Vorformling zu einem Halteelement an der stromabwärts zur Inspektionsvorrichtung angeordneten Selektiereinheit der Sortiervorrichtung ausgesondert werden.

Insbesondere gegenüber einer Aussonderungseinrichtung mit einem ersten Transportrad, an dem ein auszusortierender Vorformling mithilfe von Inspektionsmitteln identifiziert wird und einem zweiten Transportrad, an dem der identifizierte Vorformling ausgesondert wird, ist eine aufwendige Prozesssteuerung vonnöten. Bei derartigen Konstruktionen muss eine Steuerungsvorrichtung die Position des zur Aussonderung identifizierten Vorformlings während seines Transports an zwei unterschiedlichen Transporträdern überwachen und die Aussonderungseinheit zu einem Zeitpunkt aktivieren zu dem der Vorformling auf dem zweiten Transportrad die Aussonderungseinheit passiert. Dabei sind nicht zur die Drehgeschwindigkeiten der beteiligten Transporträder sehr genau zu synchronisieren sondern es muss auch die Bewegung der auszusondernden Vorformlinge bei einem Wechsel von Rotationsrichtung und Winkelgeschwindigkeit erfasst und verarbeitet werden. Bei Verwendung eines einzelnen Transportrades, an dem die Vorformlinge sowohl geprüft als auch selektiv ausgesondert werden, ist der Steuerungsaufwand deutlich geringer und somit zuverlässiger und robuster umsetzbar.

Für den Weitertransport der Vorformlinge in der sich der Vereinzelungseinheit anschließenden Staustrecke ist daran gedacht, dass die Staustrecke eine Fördereinrichtung mit einer Transportbahn aufweist, wobei die Vorformlinge entlang der Transportbahn in einer im Wesentlichen horizontalen Richtung transportiert werden. In einer ersten Variante ist daran gedacht, dass die Staustrecke einzig aus der Fördereinrichtung mit der im Wesentlichen horizontal verlaufenden Transportbahn besteht. Alternativ kann die Staustrecke zumindest abschnittsweise eine Fördereinrichtung mit der im Wesentlichen horizontal verlaufenden Transportbahn aufweisen.

Die Antriebsmittel der die Transportbahn aufweisenden Fördereinrichtung zum Vorschub der Vorformlinge werden vorteilhafterweise derart gewählt, dass ein materialschonender Transport unterstützt wird. Gedacht ist beispielsweise an die Beaufschlagung der Vorformlinge mit strömender Luft, einer Einklemmung des Mündungsbereiches oder eines Stützringbereiches der Vorformlinge zwischen geeigneten Klemmmitteln oder die Verwendung von Rollenführungen, die die Vorformlinge reibungsarm entlang einer vorgegebenen Transportbahn führen.

Der Begriff einer horizontalen Transportbahn für die Vorformlinge umfasst neben einer exakten waagerechten Ausrichtung auch leichte Gefälle, typischerweise bis zu einem Bereich von +/- 10°, so dass auch in Transportrichtung vergleichsweise geringe Steigungen oder geringe Gefälle durchlaufen werden können. Die konkrete Ausrichtung der im wesentlichen horizontalen Transportbahn ergibt sich unter Berücksichtigung der miteinander zu koppelnden Sortiereinrichtungen und Blasmaschinen sowie der konkreten Bauhöhen der verwendeten Teile. Insbesondere der im Weiteren beschriebene Transport der Vorformlinge unter Verwendung von Rollenführungen ermöglicht auch eine sehr flache Anordnung der Sortiereinrichtung mit in Richtung auf die Blasmaschine ansteigender Transportbahn für die Vorformlinge. Die Rollenführungen sind dafür geeignet, eine Steigung der Transportbahn für die Vorformlinge bis zu etwa 30° zu realisieren. Auch eine derart ansteigende Transportbahn für die Vorformlinge erweist sich in Kombination mit Sortiereinrichtungen, die rotierende Scheiben aufweisen, als besonders vorteilhaft.

Gemäß einer vorstehend bereits kurz erwähnten Ausführungsvariante der Erfindung ist daran gedacht, die Vorformlinge entlang der im Wesentlichen horizontal verlaufenden Transportbahn unter Verwendung einer Gasströmung zu transportieren.

Die erforderliche Gasströmung kann in einfacher Weise dadurch bereitgestellt werden, dass die Vorschubkraft durch eine Druckluftströmung erzeugt wird. Dabei ist insbesondere vorgesehen, dass die Vorformlinge mittels Luftstößen fortbewegt werden, z.B. mittels pulsierenden Druckluftstößen.

Eine vorteilhafte Aufbringung der Vorschubkräfte er-folgt dadurch, dass die Vorschubkraft zwischen einer Mündung der Vorformlinge und einem Stützring auf die Vorformlinge einwirkt.

Zur Vermeidung von Anpresskräften zwischen den Vorformlingen und den verwendeten Führungsschienen erweist es sich als vorteilhaft, dass die Vorschubkraft außenseitig auf die Vorformlinge einwirkt.

Zur optimalen Strömungsausnutzung wird vorgeschlagen, dass die Vorformlinge von der Gasströmung innerhalb eines Strömungskanals bewegt werden.

Eine vorteilhafte Krafterzeugung bei gleichzeitig einfacher mechanischer Konstruktion wird dadurch ermöglicht, dass die Gasströmung in einer Förderrichtung der Vorformlinge schräg auf die Vorformlinge ausgerichtet wird.

Zu einer gleichmäßigen Bereitstellung von Vortriebskräften entlang eines Transportweges der Vorformlinge trägt es bei, dass die Gasströmung entlang des Transportweges der Vorformlinge aus einer Mehrzahl von Ausströmöffnungen heraus in Richtung auf die Vorformlinge geleitet wird.

Zur Erreichung einer geringen Bauhöhe der Gesamtvorrichtung erweist es sich insbesondere als zweckmäßig, dass die Vorformlinge von der Gasströmung in einer im Wesentlichen horizontal verlaufenden Richtung transportiert werden.

Die Bereitstellung eines zusätzlichen mechanischen Staudruckes beim Transport der Vorformlinge durch die Staustrecke kann dadurch erreicht werden, dass die Vorformlinge im Bereich der Staustrecke bereichsweise auf einem in lotrechter Richtung schräg nach unten orientierten Transportweg bewegt werden.

Zur Unterstützung einer einfacher anwendungsabhängiger Konfigurierbarkeit der Fördereinrichtung kann dadurch erreicht werden, dass die Gasströmung durch mindestens ein in einer Führungseinrichtung positioniertes Einlegeteil in Richtung auf die Vorformlinge geleitet wird.

Erfindungsgemäß wird als Sortiervorrichtung eine der zuvor beschriebenen Sortiervorrichtungen verwendet.

In einer weiteren Ausgestaltung des Verfahrens ist daran gedacht, dass die Vorformlinge aus der Staustrecke kommend an eine zweite Vereinzelungseinheit übergeben werden und nach erfolgter Vereinzelung lückenlos separiert weitertransportiert werden.

Bei der Übernahme aus der Staustrecke und der Weiterführung der Vorformlinge in der zweiten Vereinzelungseinheit ist dafür gesorgt, dass die Vorformlinge lückenlos und vereinzelt an weitere Bearbeitungsstationen der Blasmaschine übergeben werden können. Die Lückenschließung ist vorteilhaft, da so ein unterbrechungsfreier Ablauf bei der Herstellung der Behälter in der Blasmaschine unterstützt wird.

Vorteile und Varianten zu dem erfindungsgemäßen Verfahren ergeben sich unter anderem auch aus den zu der erfindungsgemäßen Sortiervorrichtung erläuterten Details.

Erfindungsgemäß ist auch eine Transportvorrichtung zur Zuführung von Vorformlingen an eine Blasmaschine für die Blasformung von Behältern aus thermoplastischem Material, wobei die Blasmaschine ausgebildet und eingerichtet ist zur Ausführung eines der zuvor beschriebenen Verfahren. Erfindungsgemäß ist vorgesehen, dass die Transportvorrichtung eine der zuvor beschriebenen Sortiervorrichtungen aufweist.

Erfindungsgemäß ist auch eine Blasmaschine zur Blasformung von Behältern aus einem thermoplastischen Material, aufweisend eine der zuvor beschriebenen Sortiervorrichtungen und/oder oder eine der zuvor beschriebenen Transportvorrichtungen.

Vorteile und bevorzugte Ausgestaltungen der erfindungsgemäßen Transortvorrichtung zur Zuführung von Vorformlingen an eine Blasmaschine und der erfindungsgemäßen Blasmaschine ergeben sich auch aus den zur erfindungsgemäßen Sortiervorrichtung und zum erfindungsgemäßen Verfahren zur Zuführung von Vorformlingen erläuterten Details.

Ausführungsbeispiele der Erfindung sind in den Zeichnungen schematisch dargestellt. Es zeigen:
- Fig. 1: eine erfindungsgemäße Sortiervorrichtung in isometrischer Ansicht,
- Fig. 2: die Sortiervorrichtung aus Fig. 1 mit einer Inspektionsvorrichtung und einem Einlaufbereich in der Draufsicht,
- Fig. 3: einen Schnitt durch die Sortiervorrichtung aus Fig. 2 entlang der Linie 3-3,
- Fig. 4: die Sortiervorrichtung mit Inspektionsvorrichtung und Einlaufbereich aus Fig. 2 in isometrischer Darstellung, und
- Fig. 5: eine stark schematisierte Darstellung eines Transportsystems mit einer erfindungsgemäßen Transportvorrichtung, einer Staustrecke und einer Vereinzelungsvorrichtung.

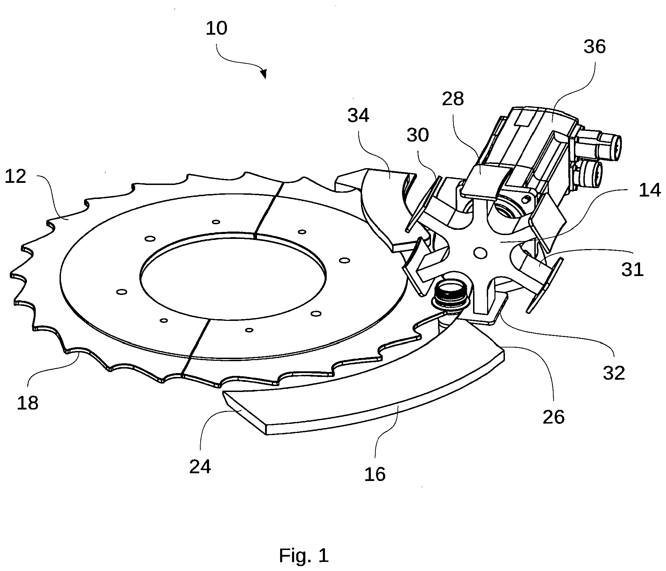

Fig. 1 ist eine isometrische Darstellung einer erfindungsgemäßen Sortiervorrichtung 10 mit einem in einer Ebene rotierenden Transportrad 12 und einem im Randbereich des Transportrades 12 angeordneten Auswurfstern 14. Der Auswurfstern 14 ist an einer Drehachse gelagert und rotiert in einer Ebene, die schräg, insbesondere senkrecht auf der Rotationsebene des Transportrades 12 steht.

In der dargestellten Variante ist das Transportrad 12 bereichsweise von einem Führungskragen 16 umlaufen. Das Transportrad 12 weist taschenartige Aufnahmerezesse 18 auf, die zur Aufnahme und zum Transport von Vorformlingen 20 ausgebildet sind. Bei dargestellter Variante werden Vorformlinge 20 zwischen dem Führungskragen 16 und dem Transportrad 12 frei hängend, der Umfangsrichtung des Transportrades 12 folgend, transportiert. Die Vorformlinge 20 werden dafür jeweils durch in Rotationsrichtung des Transportrades 12 nachlaufende Schubkanten der etwa taschenförmig ausgebildeten Aufnahmerezesse 18 zwangsgeführt fortbewegt.

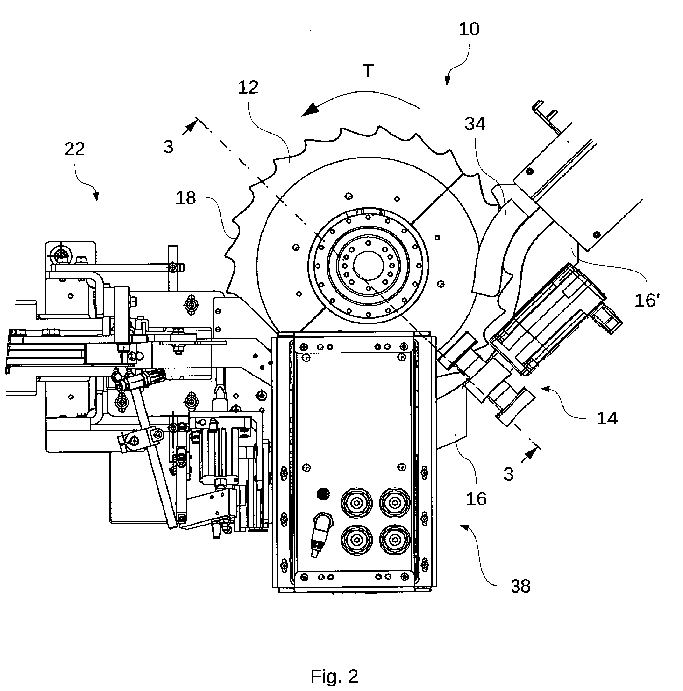

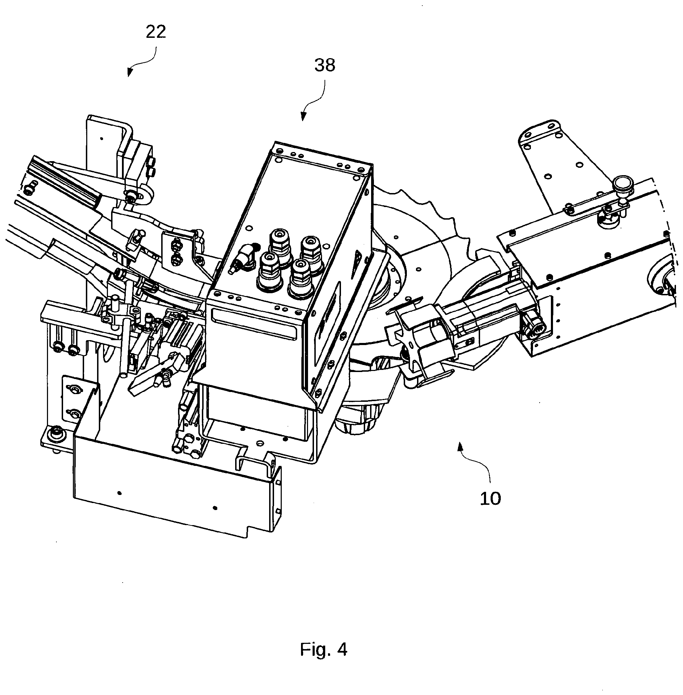

Die Vorformlinge 20 werden in einem beispielhaft in den Fig. 2 und 4 dargestellten Einlaufbereich 22 an das Transportrad 12 übergeben und nach der Übernahme wie erläutert zwischen dem Führungskragen 16 und dem Transportrad 12 an einem unterhalb ihres Mündungsbereiches angeordneten Haltekragen frei hängend weitertransportiert.

In der hier gezeigten Variante der Sortiervorrichtung 10 ist der Führungskragen 16 als Bogensegment ausgeführt mit einer in Rotationsrichtung des Transportrades 12 gesehenen Hinterkante 24 und einer Vorderkante 26. In unmittelbarer Folge zur Vorderkante 26 schließt sich an den Führungskragen 16 der Auswurfstern 14 an. An dem Auswurfstern 14, der in der gezeigten Variante senkrecht zur durch das Transportrad 12 aufgespannten Ebene rotiert, sind Auswurfarme 14 mit hier plattenförmig ausgebildeten Führungsabschnitten 28 angeordnet. Die Führungsabschnitte 28 weisen jeweils einen Haltebereich 30 auf, der die Vorformlinge 20 nach der Übernahme vom Führungskragen 16 gegen Herausfallen aus dem Aufnahmerezess 18 des Transportrades 12 sichert und in der gezeigten Variante weiter in Umlaufrichtung des Transportrades 12 führt. Vorliegend ist der Haltebereich 30 etwa kragenförmig ausgebildet und ergänzt, in der Ruhestellung die Vorformlinge 20 stützend, den Haltekragen 16 im Bereich des Auswurfsterns 14.

Der Führungsabschnitt 28 mit dem Haltebereich 30 ist an einem Auswurfarm 32 des Auswurfsterns 14 befestigt. Wie dargestellt, kann der Führungsabschnitt 28 als Platte ausgebildet sein, die quer, insbesondere senkrecht, zur radialen Richtung an dem Auswurfarm 32 befestigt ist. Neben einem Haltebereich 30, der Vorformlinge 20 gegen unbeabsichtigtes Herausfallen aus dem Aufnahmerezess 18 sichert, kann an dem Führungsabschnitt 28 auch ein Auswurfbereich 32 vorgesehen sein.

Bei einer Rotation des Auswurfsterns 14 weicht der Führungsabschnitt 28 mit dem Haltebereich 30 in radiale Richtung des Transportrades 12 nach außen hin aus und gibt einen, vorher durch den Haltebereich 30 gesicherten Vorformling 20 zum Auswurf frei.

In dargestellter Variante ist vorgesehen, dass eine in Rotationsrichtung des Auswurfsterns 14 vorlaufenden Kante des Auswurfbereichs 32 den am Haltebereich 30 freigegebenen Vorformling 20 radial nach außen gerichtet vom Transportrad 12 wegschiebt bzw. -stößt.

Eine dem Auswurfstern 14 stromabwärts nachgeordnete Führungsschiene 34 übernimmt die von dem Transportrad 12 transportierten Vorformlinge 20 und leitet diese für den Weitertransport vom Transportrad 12 weg.

Fig. 2 zeigt in einer Draufsicht von oben die Sortiervorrichtung 10 aus Fig. 1 mit einer im Bereich des Transportrades 12 angeordneten Inspektionsvorrichtung 38 zur Erkennung von für den Blasprozess ungeeigneten Vorformlingen 20 und einen Einlaufbereich 22, der zur Übergabe von Vorformlingen 20 an das Transportrad 12 dient. In Fig. 2 ist ein zweiter Führungskragenabschnitt 16' gezeigt, der sich in Transportrichtung der Vorformlinge 20 gesehen stromabwärts unmittelbar hinter dem Auswurfstern 14 anschließt. Die zwischen den Führungskragenabschnitten 16 und 16' ausgebildete Lücke ist in der Ruhestellung von dem Auswurfstern 14 derart besetzt, dass ein unterbrechungsfreier Transport von Vorformlingen 20 vom Führungskragenabschnitt 16 zum Führungskragenabschnitt 16' ermöglicht ist. Sofern kein Auswurf eines Vorformlings 20 vorgesehen ist, stützt der Führungsabschnitt 28 des Auswurfsterns 14 mit dem Haltebereich 30 - jedenfalls in der dargestellten Variante - die in den Aufnahmerezessen 18 transportierten Vorformlinge 20 ab. Die von dem Auswurfstern 14 mit dem Führungsabschnitt 28 gefüllte Lücke zwischen den Führungskragenabschnitten 16 und 16' hat mindestens die Breite eines Vorformlings 20. Insbesondere entspricht der Abstand zwischen den Abschnitten 16 und 16' höchstens dem mittleren Abstand zwischen zwei aufeinanderfolgenden Aufnahmerezessen 18 des Transportrades 12. Die für den Transport der Vorformlinge 20 vorgesehene Rotationsrichtung des Transportrades 12 ist mit dem Richtungspfeil T gezeigt.

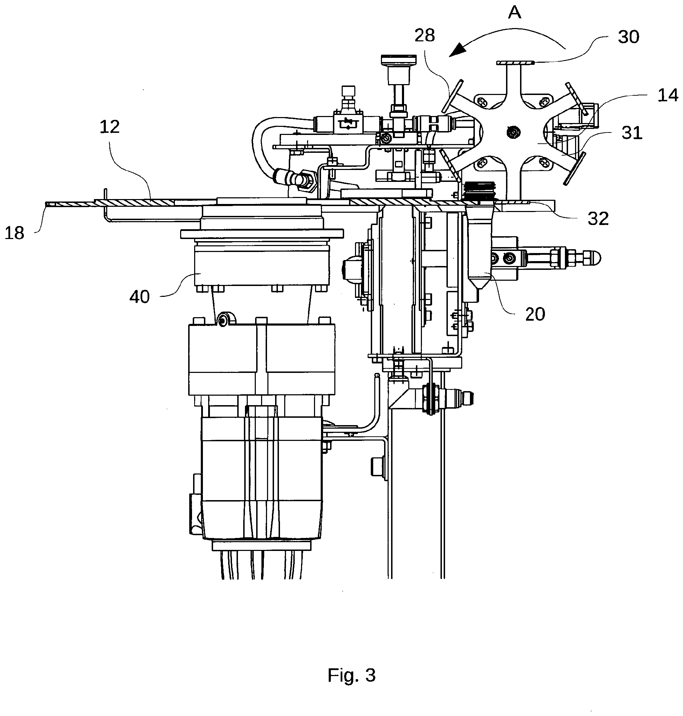

Fig. 3 ist eine Schnittdarstellung der Sortiervorrichtung 10 entlang der Linie 3-3 aus Fig. 2. Gut erkennbar ist der Vorformling 20, der zwischen dem Führungsabschnitt 28 des Auswurfsterns 14 und dem Randbereich des Transportrades 12 an einem unterhalb des Mündungsbereiches des Vorformlings 20 ausgebildeten Haltekragen frei hängend gehalten ist. Wie in der Schnittdarstellung verdeutlicht und im Vergleich mit Fig. 1 ersichtlich, wird der Vorformling 20 für den Transport entlang des Transportrades 12 von einer hinteren Kante des Aufnahmerezesses 18 kontaktiert und bei der Rotation des Transportrades 12 in Umlaufrichtung zwangsgeführt bewegt. Die Rotationsrichtung des Auswurfsterns 14 ist mit dem Richtungspfeil A angegeben.

Unterhalb des Transportrades 12 ist ein für das Transportrad 12 vorgesehener Antrieb 40 gezeigt. Wie dargestellt, kann der Transportradantrieb 40 sowohl zum Antrieb als auch zur tragenden Halterung des Transportrades 12 vorgesehen sein.

Wie in der Fig. 3 gut erkennbar, hat der Auswurfstern 14 mehrere Auswurfarme 32, die bezüglich der Rotationsachse des Auswurfsterns 14 radial nach außen gestreckt sind. Am radial nach außen gerichteten Endbereich jedes Auswurfarmes 32 ist jeweils ein Führungsabschnitt 28 mit einem in Rotationsrichtung des Auswurfsterns 14 vorlaufenden Auswurfbereich 32 und einem nachlaufenden Haltebereich 30 angeordnet. Der Auswurfbereich 32 und/oder der Haltebereich 30 können jeweils durch in Umfangsrichtung des Transportsterns 14 weisende Kanten ausgebildet sein.

In Fig. 3 ist gut erkennbar, dass für einen Auswurf eines Vorformlings 20 durch Rotation des Auswurfsterns 14 zunächst der Haltebereich 30 radial nach außen gerichtet und weiter der durch den Auswurfarm 32 durchgeführten Kreisbewegung folgend von dem Transportrad wegbewegt wird und der Vorformling 20 daraufhin durch den Auswurfbereich 32 von dem Transportrad 12 weggestoßen wird.

Fig. 4 ist eine isometrische Darstellung der Sortiervorrichtung 10 mit der Inspektionsvorrichtung 32 und dem Einlaufbereich 22 aus Fig. 2.

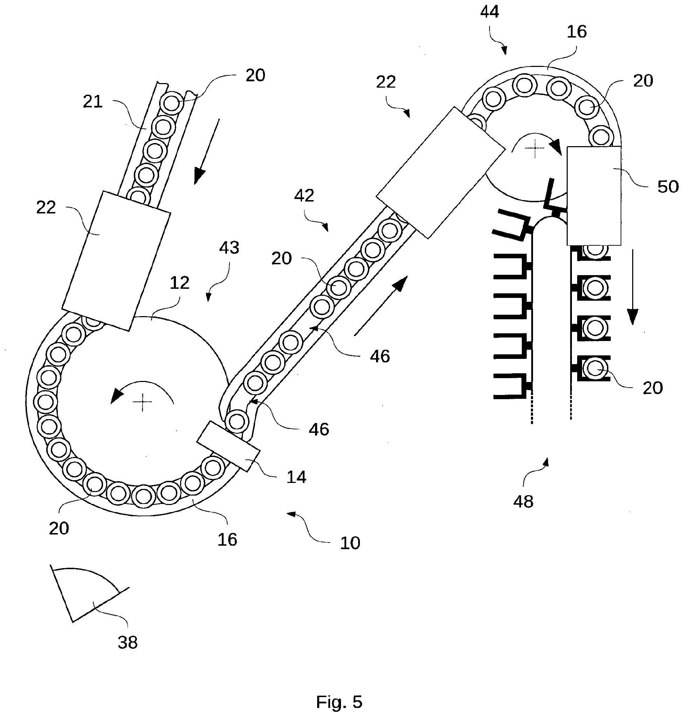

Fig. 5 zeigt stark schematisiert eine Transportvorrichtung mit einer erfindungsgemäßen Sortiereinrichtung 10. Auf zeichnerische Details wurde aus Gründen der besseren Übersichtlichkeit verzichtet. In dieser Figur ist ein Einlaufbereich 22 gezeigt, der Vorformlinge 20 an eine erfindungsgemäß ausgebildete Sortiervorrichtung 10 übergibt. Der Einlaufbereich 22 übernimmt aufgereihte und ausgerichtete Vorformlinge aus einer Einlaufschiene 21, die dem Einlaufbereich 22 in Transportrichtung der Vorformlinge 20 stromaufwärts vorgelagert ist. Stromabwärts zum Einlaufbereich 22 werden die Vorformlinge 20 an das Transportrad 12 der Sortiereinrichtung 10 übergeben. Die Vorformlinge 20 werden im Bereich der Sortiereinrichtung 10 mittels Rotation des Transportrades 12 zwischen dem Transportrad 12 und einem Führungskragen 16 hängend der Umfangsrichtung des Transportrades 12 folgend transportiert. Die Vorformlinge können dafür in taschenförmige Rezesse am Umfang des Transportrades 12 aufgenommen sein (nicht dargestellt). Details der Transportvorrichtung, insbesondere einzelner Komponenten können wie zu vorangegangenen Figuren erläutert ausgebildet sein.

Eine Inspektionsvorrichtung 38 überprüft die an dem Transportrad 12 transportierten Vorformlinge 20. Bei Erkennung von für die Weiterverarbeitung, beziehungsweise für den Weitertransport ungeeigneter Vorformlinge 20 wird ein erfindungsgemäßer Auswurfstern 14 derart gesteuert, dass die als ungeeignet erkannten Vorformlinge 20 jeweils einzeln aus dem Transportstrom der Vorformlinge 20 herausbewegt, beziehungsweise ausgeschleust werden.

Beim Aussondern einzelner Vorformlinge 20 entstehen im Transportstrom Lücken 46, die für die Zuführung an die Blasmaschine geschlossen werden müssen. Zur Schließung dieser Lücken 46 wird in der hier dargestellten Variante vorgeschlagen, anschließend an die Sortiereinrichtung 10 eine Staustrecke 42 anzuordnen. Die Staustrecke kann z.B. als Luftförderstrecke ausgebildet sein. In denkbarer Alternative kann die Staustrecke 42 als zumindest bereichsweise waagerecht und/oder geneigt verlaufende Ablaufschiene ausgebildet sein. Der Staustrecke 42 schließt sich ein weiterer Einlaufbereich 22 an, der die Vorformlinge 20 übernimmt und an eine Vereinzelungsvorrichtung 44 übergibt. Details einer in der Staustrecke verwendeten Fördereinrichtung können insbesondere wie bei den in den Druckschriften WO 2006/058512 und/oder DE 10 2010 028 500 A1 beschriebenen Fördereinrichtungen ausgebildet sein. Für Ausgestaltungsdetails wird auf diese Druckschriften ausdrücklich Bezug genommen.

Mittels der Vereinzelungsvorrichtung 44 werden die Vorformlinge 20 für den Weitertransport im Bereich einer Blasmaschine, z.B. für die Zuführung an eine Heizstrecke, vereinzelt. Es kann dafür beispielsweise vorgesehen sein, die Vorformlinge 20 im Bereich der Vereinzelungsvorrichtung 44, insbesondere von einem der Vereinzelungsvorrichtung zugeordneten Transportrad, an einen Auslaufbereich 50 zu übergeben, der die Vorformlinge 20 der Reihe nach an eine Einzelförderstrecke 48 übergibt. Details des gezeigten Transportrad der Vereinzelungsvorrichtung 44 können wie bei dem Transportrad 12 der Sortiereinrichtung 10 ausgebildet sein. In der gezeigten Variante ist rein schematisch angedeutet, dass die Einzelförderstrecke 48 als Umlaufband mit daran befestigten Fördergabeln zum Transport separierter Vorformlinge 20 ausgeführt sein kann. Darüber hinaus sind auch andere, üblicherweise eingesetzte Förderstrecken zum Transport vereinzelter Vorformlinge 20 denkbar.

Die hier gezeigte Transportvorrichtung ermöglicht das Aussortieren von als ungeeignet erkannten Vorformlingen 20 und sorgt für eine Schließung der durch ausgesonderte Vorformlinge 20 entstandenen Lücken 46, so dass ein ununterbrochener und lückenloser Transportstrom von Vorformlingen 20 für die Zuführung an eine Blasmaschine, insbesondere an eine Heizeinrichtung einer Blasmaschine, bei verringerter Vorrichtungskomplexität ermöglicht ist.

### Bezugszeichenliste

- 10: Sortiervorrichtung
- 12: Transportrad
- 14: Auswurfstern
- 16: Führungskragen
- 18: Aufnahmerezess
- 20: Vorformling
- 21: Einlaufschiene
- 22: Einlaufbereich
- 24: Führungskragen Hinterkante
- 26: Führungskragen Vorderkante
- 28: Führungsabschnitt
- 30: Haltebereich
- 31: Auswurfarm
- 32: Auswurfbereich
- 34: Führungsschiene
- 36: Auswurfantrieb
- 38: Inspektionsvorrichtung
- 40: Transportradantrieb
- 42: Staustrecke
- 43: erste Vereinzelungseinheit
- 44: zweite Vereinzelungseinheit
- 46: Lücke
- 48: Einzeltransportstrecke
- 50: Auslaufbereich
- T: Rotationsrichtung des Tragrades
- A: Rotationsrichtung des Auswurfsterns

## Patentansprüche

1. Sortiervorrichtung (10) zum Transport von Vorformlingen (20) aus einem thermoplastischen Material im Bereich einer Blasmaschine zur Blasformung von Behältern, aufweisend ein Transportrad (12) mit mehreren, an seinem Umfang in Umfangsrichtung verteilt angeordneten Aufnahmerezessen (18) zur Aufnahme und Beförderung der Vorformlinge (20), einen Führungskragen (16), der das Transportrad (12) radial beabstandet bereichsweise umläuft, wobei die Vorformlinge (20) im Bereich der Sortiervorrichtung (10) zwischen dem Transportrad (12) und dem Führungskragen (16) hängend transportiert werden, und eine Selektiereinheit zur selektiven Aussonderung jeweils eines einzelnen, in einem der Aufnahmerezesse (18) des Transportrades (12) transportieren Vorformlings (20), **dadurch gekennzeichnet, dass** die Selektiereinheit einen drehbar gelagerten Auswurfstern (14) mit mehreren Auswurfarmen (31) aufweist, der in der Ruhestellung mit einem ersten Auswurfarm (31) in Transportrichtung der Vorformlinge (20) unmittelbar an den Führungskragen (16) anschließend derart in den Umfangsbereich des Transportrades (12) greift, dass die in den Aufnahmerezessen (18) an dem ersten Auswurfarm (31) vorbeitransportierten Vorformlinge (20) gegen Herausfallen aus den jeweiligen Aufnahmerezessen (18) gesichert sind, wobei der Auswurfstern (14) bei einer Rotationsbewegung mit einem dem ersten Auswurfarm (31) nachlaufenden zweiten Auswurfarm (32) einen einzelnen auszusondernden Vorformling (20) aus einem der Aufnahmerezesse (18) des Transportrades (12) herausstößt, und wobei der zweite Auswurfarm (31) nach erfolgtem Ausstoß des auszusondernden Vorformlings (20) in die die Vorformlinge (20) gegen Herausfallen sichernde Position rückt.

2. Sortiervorrichtung nach Anspruch 1, **dadurch gekennzeichnet, dass** in Transportrichtung der Vorformlinge (20) in unmittelbarem Anschluss an den Auswurfstern (14) ein zweiter Führungskragen (16') radial beabstandet zum Transportrad (12) angeordnet ist, derart, dass die beim Transport durch die sich in Ruhestellung befindenden Auswurfarme (31) gegen Herausfallen gesicherten Vorformlinge (20) von dem Auswurfstern (14) übernommen und zwischen dem zweiten Führungskragen (16') und dem Transportrad (12) hängend zumindest bereichsweise der Umfangsrichtung des Transportrades (12) folgend weiterführt werden.

3. Sortiervorrichtung nach einem der Ansprüche 1 oder 2, **dadurch gekennzeichnet, dass** die Rotationsachse des Auswurfsterns (14) und die Rotationsachse des Transportrades (12) in winklig zueinander verlaufenden Ebenen liegen.

4. Sortiervorrichtung nach einem der vorangegangenen Ansprüche, **dadurch gekennzeichnet, dass** der Auswurfstern (14) mindestens drei Auswurfarme (31) aufweist, wobei die Auswurfarme (31) jeweils einen Führungsabschnitt (28) mit einem Haltebereich (30) zur Sicherung eines im Bereich des Auswurfsterns (14) transportierten Vorformlings (20) aufweisen.

5. Sortiervorrichtung nach einem der vorangegangenen Ansprüche, **dadurch gekennzeichnet, dass** der Auswurfstern (14) mindestens drei Auswurfarme (31) aufweist, wobei die Auswurfarme (31) jeweils einen Führungsabschnitt (28) mit einem Auswurfbereich (32) zum Ausstoßen eines im Bereich des Auswurfsterns (14) transportierten Vorformlings (20) aufweisen.

6. Sortiervorrichtung nach einem der vorangegangen Ansprüche, **dadurch gekennzeichnet, dass** die Rotationsbewegung des Auswurfsterns (14) mit der Rotationsbewegung des Transportrades (12) synchronisiert ist.

7. Verfahren zur Zuführung von Vorformlingen (20) an eine Blasmaschine zur Blasformung von Behältern aus einem thermoplastischen Material, wobei aufgereihte und ausgerichtete Vorformlinge (20) an eine erste Vereinzelungseinheit (43) mit einer Sortiervorrichtung (10) zum Aussondern einzelner Vorformlinge (20) übergeben werden, die Vorformlinge (20) im Bereich der Vereinzelungseinheit (43) mittels einer Inspektionsvorrichtung (38) geprüft werden, und die Vorformlinge (20) anschließend an eine Staustrecke (42) zum Aufstauen und/oder zum Schließen von durch das Aussondern entstandenen Lücken (46) übergeben werden, **dadurch gekennzeichnet, dass** als Sortiervorrichtung (10) eine nach einem der Ansprüche 1 bis 6 ausgebildete Sortiervorrichtung (10) verwendet wird.

8. Verfahren nach Anspruch 7, **dadurch gekennzeichnet, dass** die Vereinzelungseinheit (43) ein Transportrad (12) aufweist, das die Vorformlinge (20) vor der Übergabe an die Staustrecke (42) zunächst an die Inspektionsvorrichtung (38) und dann zur selektiven Aussonderung an eine Selektiereinheit der Sortiervorrichtung (10) führt.

9. Verfahren nach einem der Ansprüche 7 oder 8, **dadurch gekennzeichnet, dass** die Staustrecke (42) eine Fördereinrichtung mit einer Transportbahn aufweist, wobei die Vorformlinge (20) entlang der Transportbahn in einer im Wesentlichen horizontalen Richtung transportiert werden.

10. Verfahren nach einem der Ansprüche 7 bis 9, **dadurch gekennzeichnet, dass** die Vorschubkraft für den Transport der Vorformlinge (1) durch die Staustrecke (42) mittels Druckluftströmung erzeugt wird.

11. Verfahren nach einem der Ansprüche 7 bis 10, **dadurch gekennzeichnet, dass** die Vorformlinge (20) im Bereich der Sortiereinrichtung (10) mittels der Inspektionsvorrichtung (38) kontaktlos, insbesondere optisch auf Materialunregelmäßigkeiten hin überprüft werden.

12. Verfahren nach einem der Ansprüche 7 bis 11, **dadurch gekennzeichnet, dass** die Vorformlinge (20) aus der Staustrecke (42) kommend an eine zweite Vereinzelungseinheit (44) übergeben werden und nach erfolgter Vereinzelung lückenlos separiert weitertransportiert werden.

13. Transportvorrichtung zur Zuführung von Vorformlingen (20) an eine Blasmaschine für die Blasformung von Behältern aus thermoplastischem Material, ausgebildet und eingerichtet zur Ausführung eines Verfahrens nach einem der Ansprüche 7 bis 12, wobei die Transportvorrichtung eine Sortiervorrichtung (10) nach einem der Ansprüche 1 bis 6 aufweist.

14. Blasmaschine zur Blasformung von Behältern aus Vorformlingen (20) aus einem thermoplastischen Material, aufweisend eine Sortiervorrichtung (10) nach einem der Ansprüche 1 bis 6 und/oder eine Transportvorrichtung nach Anspruch 13.

## Claims

1. Sorting device (10) for transporting preforms (20) made of a thermoplastic material in the region of a blowing machine for the blow moulding of containers, comprising a transport wheel (12) with a plurality of holding recesses (18) arranged in a distributed manner on its circumference in the circumferential direction for holding and conveying the preforms (20) and comprising a guide collar (16) that runs around the transport wheel (12) spaced away in sections in a radial manner, wherein the preforms (20) in the region of the sorting device (10) are transported between the transport wheel (12) and the guide collar (16) while hanging, as well as comprising a selecting unit for selectively separating, in each case, a preform (20) transported in one of the holding recesses (18) of the transport wheel (12), **characterized in that** the selecting unit comprises a rotatably mounted ejection star (14) with a plurality of ejection arms (31), which, in the rest position, using a first ejection arm (31) directly adjoining the guide collar (16) in the transport direction of the preforms (20), grips into the circumferential area of the transport wheel (12) in such a way that the preforms (20) transported in the holding recesses (18) along the first ejection arm (31) are secured against falling out of the respective holding recesses (18), wherein the ejection star (14) ejects an individual preform (20) to be separated out of one of the holding recesses (18) of the transport wheel (12) with a rotational movement using a second ejection arm (31) running after the first ejection arm (31), and wherein the second ejection arm (32) moves into the position securing the preforms (20) against falling out after ejection of the preform (20) to be separated takes place.

2. Sorting device according to Claim 1, **characterized in that**, in the transport direction of the preforms (20) directly adjoining the ejection star (14), a second guide collar (16') is arranged spaced away from the transport wheel (12) in a radial manner in such a way that the preforms (20) secured against falling out during transport by the ejection arms (31) that are in the rest position are picked up by the ejection star (14) and subsequently further conveyed between the second guide collar (16') and the transport wheel (12) while hanging at least in sections following the circumferential direction of the transport wheel (12).

3. Sorting device according to any one of Claims 1 or 2, **characterized in that** the axis of rotation of the ejection star (14) and the axis of rotation of the transport wheel (12) lie on planes that run at an angle to one another.

4. Sorting device according to any one of the preceding claims, **characterized in that** the ejection star (14) comprises at least three ejection arms (31), wherein the ejection arms (31) each have a guide section (28) with a holding region (30) for securing a preform (20) transported in the region of the ejection star (14).

5. Sorting device according to any one of the preceding claims, **characterized in that** the ejection star (14) comprises at least three ejection arms (31), wherein the ejection arms (31) each comprise a guide section (28) with an ejection region (32) for ejecting a preform (20) transported in the region of the ejection star (14) .

6. Sorting device according to any one of the preceding claims, **characterized in that** the rotational motion of the ejection star (14) is synchronized with the rotational motion of the transport wheel (12).

7. Method for supplying preforms (20) to a blow moulding machine for the blow moulding of containers made of a thermoplastic material, wherein lined-up and aligned preforms (20) are transferred to a first separation unit (43) with a sorting device (10) for separating individual preforms (20), the preforms (20) are tested in the region of the separation unit (43) by means of an inspection device (38), and the preforms (20) are then transferred to a buffer line (42) for filling in and/or for closing gaps (46) created by the separation process, **characterized in that** a sorting device (10) designed according to one of the Claims 1 to 6 is used as a sorting device (10).

8. Method according to Claim 7, **characterized in that** the separation unit (43) comprises a transport wheel (12), which initially guides the preforms (20) to the inspection device (38) before the transfer to the buffer line (42), and then to a selecting unit of the sorting device (10) for selective separation.

9. Method according to any one of Claims 7 or 8, **characterized in that** the buffer line (42) comprises a conveying device with a transport path, wherein the preforms (20) are transported along the transport path in a substantially horizontal direction.

10. Method according to any one of Claims 7 to 9, **characterized in that** the feed force for the transport of the preforms (1) through the buffer line (42) is generated by means of compressed air flow.

11. Method according to any one of Claims 7 to 10, **characterized in that** the preforms (20) are check for material irregularities in a contactless manner in the region of the sorting device (10) by means of the inspection device (38), in particular, being optically checked.

12. Method according to any one of Claims 7 to 11, **characterized in that** the preforms (20) coming from the buffer line (42) are passed to a second separation unit (44) and, after separation has taken place, are seamlessly transported in their separated state.

13. Transport device for supplying preforms (20) to a blowing machine for the blow moulding of containers made of thermoplastic material, designed and set up for carrying out a method according to any one of Claims 7 to 12, wherein the transport device comprises a sorting device (10) according to any one of Claims 1 to 6.

14. Blowing machine for the blow moulding of containers from preforms (20) made of a thermoplastic material comprising a sorting device (10) according to any one of Claims 1 to 6 and/or a transport device according to Claim 13.

## Revendications

1. Dispositif de tri (10) pour le transport de préformes (20) en un matériau thermoplastique dans la zone d'une machine de moulage de récipients par soufflage, présentant une roue de transport (12) pourvue à sa circonférence de plusieurs creux de réception (18) répartis dans le sens périphérique et destinés à recevoir et transporter les préformes (20), une collerette de guidage (16) entourant, une partie de la périphérie de la roue de transport (12) à une certaine distance radiale de celle-ci, les préformes (20) étant transportées en position suspendue dans la zone du dispositif de tri (10) entre la roue de transport (12) et la collerette de guidage (16), et une unité de sélection pour l'élimination sélective de préformes (20) individuelles transportées dans l'un des creux de réception (18) de la roue de transport (12), **caractérisé en ce que** l'unité de sélection présente une étoile d'éjection (14) dotée de plusieurs bras d'éjection (31) logée de manière à pouvoir tourner, laquelle, lorsqu'elle est en position de repos, s'engage, dans le sens de transport des préformes (20), avec un premier bras d'éjection (31) dans la zone périphérique de la roue de transport (12) en une position immédiatement adjacente à la collerette de guidage (16) de façon telle que les préformes (20) transportées dans les creux de réception (18) passant devant le premier bras d'éjection (31) soient retenues de façon à éviter qu'elle ne tombent des creux de réception (18), l'étoile d'éjection (14), lors d'un mouvement de rotation, éjectant de l'un des creux de réception (18) de la roue de transport (12) une préforme (20) donnée à éliminer à l'aide d'un second bras d'éjection (32) suivant le premier bras d'éjection (31), et le second bras d'éjection (32) se plaçant, après avoir éjecté la préforme (20) à éliminer, en position de retenue des préformes (20).

2. Dispositif de tri selon la revendication 1, **caractérisé en ce qu'**une seconde collerette de guidage (16') est agencée à une certaine distance radiale de la roue de transport (12) immédiatement après l'étoile d'éjection (14) dans le sens de transport des préformes (20) de façon à ce que les préformes (20) retenues par les bras d'éjection (31) en position de repos pour ne pas tomber lors du transport soient reprises par l'étoile d'éjection (14) et transportées suspendues entre la seconde collerette de guidage (16') et la roue de transport (12) de façon à suivre en partie au moins la périphérie de la roue de transport (12).

3. Dispositif de tri selon l'une des revendications 1 ou 2, **caractérisé en ce que** l'axe de rotation de l'étoile d'éjection (14) et l'axe de rotation de la roue de transport (12) sont dans des plans formant un angle entre eux.

4. Dispositif de tri selon l'une des revendications précédentes, **caractérisé en ce que** l'étoile d'éjection (14) présente au moins trois bras d'éjection (31), les bras d'éjection (31) présentant respectivement une section de guidage (28) avec une zone de retenue (30) pour retenir une préforme (20) transportée au niveau de l'étoile d'éjection (14).

5. Dispositif de tri selon l'une des revendications précédentes, **caractérisé en ce que** l'étoile d'éjection (14) présente au moins trois bras d'éjection (31), les bras d'éjection (31) présentant respectivement une section de guidage (28) avec une zone d'éjection (32) pour l'éjection d'une préforme (20) transportée au niveau de l'étoile d'éjection (14).

6. Dispositif de tri selon l'une des revendications précédentes, **caractérisé en ce que** le mouvement de rotation de l'étoile d'éjection (14) est synchronisé avec le mouvement de rotation de la roue de transport (12).

7. Procédé pour l'amenée de préformes (20) dans une machine de moulage par soufflage de récipients en un matériau thermoplastique, les préformes (20) alignées et orientées étant remises à une première unité de séparation (43) dotée d'un dispositif de tri (10) pour l'élimination de préformes (20), les préformes (20) étant contrôlées dans la zone de l'unité de séparation (43) au moyen d'un dispositif de contrôle (38) après quoi les préformes (20) sont remises à une section d'accumulation (42) pour s'accumuler et/ou combler des lacunes (46) occasionnées par l'élimination de préformes, **caractérisé en ce que** le dispositif de tri (10) mis en œuvre est un dispositif de tri (10) réalisé selon l'une des revendications 1 à 6.

8. Procédé selon la revendication 7, **caractérisé en ce que** l'unité de séparation (43) présente une roue de transport (12), laquelle amène les préformes (20) d'abord et avant leur remise à la section d'accumulation (42) vers le dispositif de contrôle (38) puis, en vue d'une élimination sélective, vers une unité de sélection du dispositif de tri (10).

9. Procédé selon l'une des revendications 7 ou 8, **caractérisé en ce que** la section d'accumulation (42) présente un dispositif de transport avec une voie de transport, la direction de transport des préformes (20) le long de la voie de transport étant essentiellement horizontale.

10. Procédé selon l'une des revendications 7 à 9, **caractérisé en ce que** la force d'avance assurant le transport des préformes (1) dans la section d'accumulation (42) est produite au moyen d'un courant d'air comprimé.

11. Procédé selon l'une des revendications 7 à 10, **caractérisé en ce que** dans la zone du dispositif de tri (10), les préformes (20) sont contrôlées sans contact au moyen du dispositif de contrôle (38), notamment par procédé optique, en vue de détecter des vices de matériel.

12. Procédé selon l'une des revendications 7 à 11, **caractérisé en ce que** les préformes (20) sortant de la section d'accumulation (42) sont remises à une seconde unité de séparation (44) puis, après séparation, transportées séparément et sans lacunes.

13. Dispositif de transport pour l'amenée de préformes (20) dans une machine de moulage par soufflage de récipients en un matériau thermoplastique conçu et aménagé pour l'exécution d'un procédé selon l'une des revendications 7 à 12, le dispositif de transport présentant un dispositif de tri (10) selon l'une des revendications 1 à 6.

14. Machine de moulage par soufflage de récipients à partir de préformes (20) en un matériau thermoplastique présentant un dispositif de tri (10) selon l'une des revendications 1 à 6 et/ou un dispositif de transport selon la revendication 13.
